# EUROPÄISCHE PATENTSCHRIFT

(11) **EP 4 240 598 B1**
(45) Veröffentlichungstag und Bekanntmachung des Hinweises auf die Patenterteilung: **11.12.2024**
(21) Anmeldenummer: 21801010.6
(22) Anmeldetag: 20.10.2021
(51) Int. Cl.: B60C 11/00, B29D 30/06

(54) **FAHRZEUGREIFEN MIT NEUREIFENKENNZEICHNUNG, VERFAHREN ZUR HERSTELLUNG EINES FAHRZEUGREIFENS MIT NEUREIFENKENNZEICHNUNG, REIFENHEIZFORM FÜR DIE HERSTELLUNG EINES SOLCHEN FAHRZEUGREIFENS UND VERWENDUNG EINER NEUREIFENKENNZEICHNUNG AUF EINEM SOLCHEN FAHRZEUGREIFEN**
VEHICLE TIRE WITH NEW TIRE IDENTIFIER, METHOD FOR PRODUCING A VEHICLE TIRE WITH A NEW TIRE IDENTIFIER, HEATING MOLD FOR TIRES FOR PRODUCING SUCH A VEHICLE TIRE, AND USE OF A NEW TIRE IDENTIFIER ON SUCH A VEHICLE TIRE
PNEU DE VÉHICULE AVEC IDENTIFIANT DE PNEU NEUF, PROCÉDÉ DE PRODUCTION D'UN PNEU DE VÉHICULE AVEC IDENTIFIANT DE PNEU NEUF, MOULE DE CHAUFFAGE POUR PNEUS SERVANT À PRODUIRE UN TEL PNEU DE VÉHICULE, ET UTILISATION D'UN IDENTIFIANT DE PNEU NEUF SUR UN TEL PNEU DE VÉHICULE

(30) Priorität: 09.11.2020 DE 102020214007
(43) Veröffentlichungstag der Anmeldung: 13.09.2023
(73) Patentinhaber: Continental Reifen Deutschland GmbH, 30175 Hannover (DE)
(72) Erfinder: HOPPE, Nicholas, 30165 Hannover (DE); DZICK, Jürgen, 30165 Hannover (DE)
(74) Vertreter: Continental Corporation
(86) Internationale Anmeldenummer: PCT/DE2021/200155
(87) Internationale Veröffentlichungsnummer: WO 2022/096070

(56) Entgegenhaltungen:
- EP-A1- 3 412 477
- EP-A1- 3 524 446
- CN-Y- 201 099 146
- DE-U1- 202006 002 539
- JP-A- 2013 180 588
- JP-A- 2017 071 302

## Beschreibung

Die Erfindung betrifft einen Fahrzeugreifen gemäß dem Oberbegriff des Patentanspruchs 1. Ferner betrifft die Erfindung ein Verfahren zur Herstellung eines Fahrzeugreifens gemäß dem Oberbegriff des Patentanspruchs 8, eine Reifenheizform für die Herstellung eines genannten Fahrzeugreifens gemäß dem Oberbegriff des Patentanspruchs 11 und eine Verwendung einer Neureifenkennzeichnung auf einem solchen Fahrzeugreifen gemäß dem Oberbegriff des Patentanspruchs 12.

Reifenkennzeichen befinden sich bei Fahrzeugreifen im Allgemeinen im Seitenbereich des Fahrzeugreifens und dienen in erster Linie der Verbraucherinformation. Eine Reifenkennzeichnung umfasst unter anderem den Geschwindigkeitsindex, die Marke, die Reifengröße und das Herstellungsdatum (DOT-Nummer). Andere Kennzeichen weisen auf den Hersteller oder zusätzliche Informationen hin. Kennzeichen im Seitenbereich unterliegen in der Regel keiner Abnutzung, sodass diese über die gesamte Lebensdauer eines Fahrzeugreifens für den Verbraucher sichtbar sind. Deshalb sind Kennzeichen im Bereich der Lauffläche eines Fahrzeugreifens untypisch. Im Stand der Technik sind Kennzeichen auf einer Lauffläche eines Fahrzeugreifens bekannt. So offenbart die EP 3 369 589 A1 flache Rillen in einem Laufflächenabschnitt eines neuen Reifens für ein Motorrad, die frühzeitig die Leistung eines neuen Reifens aufzeigen sollen, indem diese visuell bestätigen, dass der neue Reifen in einem gewissen Ausmaße abgenutzt ist.

Die EP3412477A1 offenbart einen Reifen umfassend Vorsprünge, die in der Draufsicht eine sechseckige Form haben und auf einer Außenfläche des Reifens ausgebildet sind, wobei eine Höhe der Vorsprünge auf 0,2 mm bis 0,5 mm eingestellt ist und die Vorsprünge benachbart zueinander in einem Abstand angeordnet sind von 0,15 mm bis 0,4 mm.

Die DE202006002539U1 befasst sich mit der Beschriftung von Gummireifen für PKW, LKW und Motorräder sowie anderer im Straßenverkehr zugelassener Fahrzeuge auf der Lauffläche. Die Beschriftung erfolgt durch Verwendung von entsprechend gestalteten Profilelementen. Diese können positiv (erhaben) oder negativ (in die Lauffläche eingeschnitten) sein. Die Beschriftung kann in direkter Betrachtung in normal lesbarer Form oder in Spiegelschrift oder in Kombination dieser Schriftelemente erfolgen.

Die CN201099146Y offenbart einen Reifen mit Markierungen auf der Reifenlauffläche, die Schriftarten eingravieren, die alle Informationen des Reifens auf einem Profilmusterblock widerspiegeln. Die Länge der Schriftarten kann je nach Reifengröße zwischen 15 mm und 40 mm betragen. Die Schriftarten können auf der Musterblockoberfläche konvex oder konkav sein, und die konvexe Länge oder konkave Tiefe beträgt je nach Reifengröße zwischen 1 mm und 5 mm.

Die JP2017071302A bezieht sich auf einen Reifen, bei dem eine Steigungsvariation, die ein Verhältnis eines Stegabschnitts und eines Rillenabschnitts in der Reifenumfangsrichtung ist, gegeben ist.

Ferner offenbart die JP2013180588A einen Reifen, der in der Lage ist, eine Verwendung eines Reifens und dergleichen durch visuelles Erkennen eines Laufflächenabschnitts zu identifizieren.

Die EP3524446A1 betrifft einen Fahrzeugreifen aufweisend eine äußere Oberfläche, wobei die äußere Oberfläche eine Vulkanette aufweist. Weiter umfasst die Erfindung zwei Verfahren und ein Formwerkzeug zur Herstellung eines solchen Fahrzeugreifens sowie einen Laufstreifen.

Problematisch bei solchen Kennzeichen im Stand der Technik ist allerdings, dass diese nachträglich auf der Lauffläche eines Fahrzeugreifens neu erzeugt werden können und somit nicht als Neureifenkennzeichen geeignet sind. Beispielsweise kann ein Kennzeichen relativ einfach mit einem Laser in die Lauffläche eingraviert werden. So können diese Kennzeichen für den Verbraucher keine verlässliche Information bieten, ob der Fahrzeugreifen neu oder gebraucht ist.

Hier setzt die vorliegende Erfindung an. Die Aufgabe der vorliegenden Erfindung ist es einen Fahrzeugreifen mit einem Kennzeichen bereitzustellen, das den Fahrzeugreifen als neu identifiziert und fälschungssicher ist. Ferner ist die Aufgabe der vorliegenden Erfindung ein Verfahren zur Herstellung eines Fahrzeugreifens bereitzustellen, durch das ein Kennzeichen auf einem Fahrzeugreifen erzeugt wird, welches den Fahrzeugreifen für den Verbraucher als neu identifiziert. Ferner ist die Aufgabe der vorliegenden Erfindung eine Reifenheizform bereitzustellen, durch die ein Kennzeichen auf einem Fahrzeugreifen erzeugt werden kann, das den Fahrzeugreifen als neu identifiziert. Es ist ferner die Aufgabe der Erfindung eine Verwendung eines Kennzeichens bereitzustellen, dass den Fahrzeugreifen als neu identifiziert.

Diese Aufgabe wird durch einen Fahrzeugreifen mit den Merkmalen des Anspruchs 1, durch ein Verfahren mit den Merkmalen des Anspruchs 8, durch eine Reifenheizform mit den Merkmalen des Anspruchs 11 und durch eine Verwendung eines Kennzeichens mit den Merkmalen des Anspruchs 12 gelöst. Bevorzugte oder vorteilhafte Ausführungsformen der Erfindung ergeben sich aus den abhängigen Ansprüchen, der nachfolgenden Beschreibung und/oder den beigefügten Figuren.

Gelöst wird die Aufgabe durch einen Fahrzeugreifen, aufweisend eine Lauffläche, wobei die Lauffläche mindestens ein Neureifenkennzeichen aufweist, dessen Oberfläche zumindest teilweise höher als die umgebene Oberfläche der Lauffläche ist. Im Sinne der Erfindung ist eine höher ausgebildete Oberfläche eine Oberfläche, die erhaben in Bezug auf die Oberfläche des Laufstreifens des Fahrzeugreifens ist. Vorteilhafterweise nutzt sich das Neureifenkennzeichen durch die teilweise höher ausgebildete Oberfläche ab, sobald der Fahrzeugreifen benutzt wird. Folglich kennzeichnet das Neureifenkennzeichen den Fahrzeugreifen lediglich im neuen ungebrauchten Zustand. Ebenfalls vorteilhaft ist, dass ein solches Neureifenkennzeichen nicht nachträglich auf die Oberfläche eines Fahrzeugreifens aufgebracht werden kann, sodass ein solches Neureifenkennzeichen fälschungssicher ist. Ferner kann ein solches Neureifenkennzeichen zusätzliche Verbraucherinformationen übermitteln, wie zum Beispiel Montagehinweise.

Die Lauffläche oder die Oberfläche des Laufstreifens kann je nach Fahrzeugreifentyp unterschiedlich ausgestaltet sein. Im Sinne der Erfindung ist die Oberfläche des Laufstreifens die äußerste Fläche des Fahrzeugreifens, die im direkten Kontakt mit der Fahrbahn steht. Denkbar ist, dass sich die Lauffläche in den Seitenbereich eines Reifens erstreckt. Die Abnutzung der Lauffläche führt zu einer stärkeren Abnutzung des Neureifenkennzeichens im Vergleich zur umgebenen Oberfläche der Lauffläche, wodurch das Neureifenkennzeichen nach einer gewissen Fahrtzeit schwindet. Wesentlich ist, dass die Lauffläche während des Fahrens zumindest teilweise in Kontakt mit der Fahrbahn steht, sodass das Neureifenkennzeichen während der Fahrt abgenutzt wird.

Neureifenkennzeichen können Belüftungsstrukturen aufweisen, dienen aber nicht als Belüftungsstrukturen, die an beziehungsweise auf der Oberfläche aufgrund des Herstellungsverfahrens des Fahrzeugreifens entstehen. Solche Belüftungsstrukturen umfassen beispielsweise zylindrische Austriebe von Minivents oder tellerartige Abdrücke von Eurovents oder linienförmige Austriebe von Belüftungen über die Formsegmentgrenzen. Neureifenkennzeichen unterscheiden sich ferner gegenüber "Color-Marker", die einen Fahrzeugreifen mit einem farbigen Element kennzeichnen, welche ebenfalls nachträglich aufgebracht werden können. Zugleich kann ein Neureifenkennzeichen ebenfalls als Informationsträger genutzt werden und somit die Funktion des Color Markers substituieren.

Neureifenkennzeichen auf einer Oberfläche eines Laufstreifens sind auf allen Typen von Fahrzeugreifen denkbar. Unter einem Fahrzeugreifen wird im Sinne der Erfindung ein Autoreifen verstanden. Ferner sind Motorradreifen, Reifen für Landwirtschaftsmaschinen, Anhängerreifen, Flugzeugreifen oder andere Reifentypen ebenfalls denkbar.

Denkbar ist, dass nur ein Neureifenkennzeichen auf einer Oberfläche einer Lauffläche eines Fahrzeugreifens angeordnet ist. Ebenfalls denkbar ist, dass mindestens zwei Neureifenkennzeichen, insbesondere eine Vielzahl von Neureifenkennzeichen, auf einer Oberfläche einer Lauffläche eines Fahrzeugreifens angeordnet sind. Vorteilhafterweise befinden sich mindestens zwei Neureifenkennzeichen, insbesondere eine Vielzahl von Neureifenkennzeichen, auf der Lauffläche, damit der Reifen besonders fälschungssicher gekennzeichnet ist.

In einer weiteren erfindungsgemäßen Ausführungsform der Erfindung weist die Oberfläche des Neureifenkennzeichens mindestens einen ersten Bereich auf, der maximal 150 Mikrometer, insbesondere maximal 100 Mikrometer, höher als die umgebene Oberfläche der Lauffläche ist. Es hat sich vorteilhafterweise gezeigt, dass ein Neureifenkennzeichen mit einer maximalen Erhöhung von 150 Mikrometer zu keiner Verschlechterung der Eigenschaft in Bezug auf die Performance des Fahrzeugreifens führt.

Ferner ist bevorzugt denkbar, dass die erhabene Oberfläche zumindest teilweise maximal 80 Mikrometer höher als die umgebene Oberfläche der Lauffläche ist. Vorteilhafterweise entsteht ein anderer kontrastreicher Eindruck für den Verbraucher, wenn die Höhe zumindest teilweise maximal 80 Mikrometer ist. Weiter bevorzugt ist denkbar, dass die Höhe maximal 60 Mikrometer, besonders bevorzugt maximal 40 Mikrometer ist. Vorteilhafterweise kann ein besonderer optischer Eindruck für den Verbraucher entstehen, wenn das Neureifenkennzeichen maximal 60 Mikrometer, bevorzugt 40 Mikrometer, höher als die umgebene Oberfläche der Lauffläche ist.

In einer weiteren erfindungsgemäßen Ausführungsform der Erfindung umschließt der erste Bereich der Oberfläche einen zweiten tiefer liegenden Bereich, der bevorzugt zumindest teilweise tiefer als die umgebene Oberfläche der Lauffläche liegt. Vorteilhafterweise entsteht ein besserer Kontrast für den Verbraucher, wenn der Umfang des Neureifenkennzeichens erhaben ist und der innere zweite Bereich der Oberfläche tiefer ausgebildet ist. Ein deutlich besserer Kontrast wird dadurch erreicht, indem die innere zweite Fläche tiefer als die umgebene Oberfläche der Lauffläche liegt.

In einer weiteren erfindungsgemäßen Ausführungsform der Erfindung liegt der zweite tiefer liegende Bereich maximal 150 Mikrometer, insbesondere maximal 100 Mikrometer, tiefer als die umgebene Oberfläche der Lauffläche. Vorteilhafterweise entsteht für den Verbraucher ein deutlicher Kontrast, wenn die zweite innenliegende Oberfläche maximal 150 Mikrometer tiefer als die umgebene Oberfläche der Lauffläche liegt. Ferner ist bevorzugt denkbar, dass die zweite Oberfläche maximal 80 Mikrometer tiefer als die umgebene Oberfläche der Lauffläche liegt, da vorteilhafterweise ein anderer Kontrast für den Verbraucher entsteht.

Denkbar ist ferner, dass die zweite innenliegende Oberfläche bevorzugt maximal 60 Mikrometer, insbesondere maximal 40 Mikrometer, tiefer als die umgebene Oberfläche der Lauffläche liegt, sodass vorteilhafterweise ein anderer Kontrast für den Verbraucher entsteht.

In einer weiteren Ausführungsform der Erfindung weist der erste und/oder zweite Bereich ein zur umgebenen Oberfläche der Lauffläche kontrastreichere Oberflächenstrukturierung auf, wobei dieser bevorzugt aufgeraut ist. Vorteilhafterweise ist eine Oberfläche mit einer kontrastreichen Oberflächenstrukturierung für den Verbraucher deutlich besser sichtbar. Es können so Neureifenkennzeichen erzeugt werden, die durch die unterschiedlich erhabenen und kontrastreichen Oberflächen eine optische Tiefe erhalten. Denkbar ist, dass die Oberfläche bevorzugt aufgeraut ist. Ferner ist denkbar, dass die Oberfläche Zacken aufweist, die für den Verbraucher einen besonderen optischen Kontrast erzeugen.

In einer weiteren Ausführungsform der Erfindung ist das mindestens eine Neureifenkennzeichen nur im Neuzustand des Fahrzeugreifens sichtbar. Vorteilhafterweise schwindet das mindestens eine Neureifenkennzeichen durch den Abrieb der Oberfläche der Lauffläche, sodass ein solches Neureifenkennzeichen lediglich sichtbar ist, wenn der Reifen im Neuzustand ist. Vorteilhafterweise kann ein solchen Neureifenkennzeichen nicht nachträglich auf die Oberfläche der Lauffläche aufgebracht werden, sodass dieses deutlich fälschungssicherer ist, als andere Kennzeichen im Stand der Technik.

In einer weiteren Ausführungsform der Erfindung weist das mindestens eine Neureifenkennzeichen mindestens eine Schraffur und/oder ein Symbol und/oder mindestens ein Zeichen und/oder mindestens eine Ziffer und/oder mindestens einen Buchstaben auf. Für den Verbraucher kann es sinnvoll sein, wenn das Neureifenkennzeichen beispielsweise auf ein Unternehmen hinweist. Denkbar ist beispielsweise ein Logo. Ferner ist denkbar, dass das mindestens eine Neureifenkennzeichen ein Energielabel und/oder eine Aufschrift "Made in Germany" ist. Denkbar ist ferner die Nutzung eines Barcodes. Vorteilhafterweise erhält der Verbraucher somit zusätzliche Informationen über die Beschaffenheit des Fahrzeugreifens, wobei diese Information lediglich im Neuzustand sichtbar ist und durch Benutzung aufgrund des Abriebs schwindet.

In einer weiteren Ausgestaltung richtet sich die Erfindung auf ein Verfahren zur Herstellung eines Fahrzeugreifens mit mindestens einem Neureifenkennzeichen, insbesondere einem beschriebenen Fahrzeugreifen, wobei der Fahrzeugreifen in einer Reifenheizform hergestellt wird, wobei die Reifenheizform mindestens ein zumindest teilweise eingraviertes Negativ eines Neureifenkennzeichens im Bereich der Lauffläche aufweist. Vorteilhafterweise kann das mindestens eine Neureifenkennzeichen nur im Herstellungsverfahren auf der Oberfläche der Lauffläche eines Fahrzeugreifens erzeugt werden. Ein solches Neureifenkennzeichen ist somit deutlich fälschungssicherer, da es nicht nachträglich auf die Lauffläche aufgebracht werden kann. Denkbar sind Reifenheizformen wie zum Beispiel eine Fräsform und/oder eine Gussform. Andere Formen sind ebenfalls denkbar. Ein eingraviertes Negativ eines Neureifenkennzeichens kann beispielsweise durch einen Laser auf der Innenfläche der Reifenheizform im Bereich der Lauffläche erzeugt werden. Andere Arten sind allerdings ebenfalls denkbar. Wesentlich ist, dass das Negativ des Neureifenkennzeichens ein negatives Abbild des zu erzeugenden Neureifenkennzeichen auf der Lauffläche des Fahrzeugreifens ist. Denkbar ist, dass die zu erzeugende Oberflächenstruktur bereits als negatives Abbild in der Reifenheizform erzeugt wurde. Alternativ ist denkbar, dass die Oberflächenstruktur des Neureifenkennzeichens nach der Erzeugung des Neureifenkennzeichens kontrastiert wird, indem die Oberfläche beispielsweise aufgeraut wird. Vorteilhafterweise entsteht für den Verbraucher so eine kontrastreiche Darstellung eines Neureifenkennzeichens.

Die bereits beschriebenen Ausführungsformen in Bezug auf den Fahrzeugreifen können sich, vice versa, auf das erfindungsgemäße Verfahren beziehen.

In einer weiteren Ausführungsform der Erfindung weist das eingravierte Negativ des Neureifenkennzeichens eine Oberfläche mit mindestens einem ersten eingravierten Bereich auf, der zumindest teilweise maximal 150 Mikrometer, insbesondere maximal 100 Mikrometer, tiefer als die umgebene Formoberfläche der Lauffläche ist. Die Formoberfläche der Lauffläche ist der Bereich der Reifenheizform, der nach der Herstellung des Fahrzeugreifens die Lauffläche des Reifens abbildet. Vorteilhafterweise weist das zumindest teilweise eingravierte Negativ in der Reifenheizform eine Vertiefung mit einem Tiefenunterschied von zumindest teilweise maximal 150 Mikrometern, insbesondere maximal 100 Mikrometer, auf, damit das Neureifenkennzeichen auf der Oberfläche der Lauffläche eine Erhöhung aufweist. Entsprechend schwindet das Neureifenkennzeichen nach Gebrauch des Reifens, sodass das Neureifenkennzeichen den Fahrzeugreifen lediglich im neuen Zustand kennzeichnet. Ferner ist das Verfahren vorteilhaft, da ein solchen Neureifenkennzeichen nicht nachträglich auf einem Fahrzeugreifen aufgebracht werden kann und somit fälschungssicher ist.

Ferner bevorzugt ist die Vertiefung des zumindest teilweise eingravierten Negativs maximal 80 Mikrometer, besonders bevorzugt maximal 60 Mikrometer, weiter besonders bevorzugt maximal 40 Mikrometer. Vorteilhafterweise entsteht für den Verbraucher bei einer solchen Vertiefung ein besonderer optischer Eindruck.

In einer weiteren Ausführungsform der Erfindung umschließt der erste eingravierte Bereich der Oberfläche einen zweiten höher liegenden eingravierten Bereich, der bevorzugt zumindest teilweise höher als die umgebene Formoberfläche der Lauffläche liegt. Die umgebene Formoberfläche der Lauffläche ist im Sinne der Erfindung die innenliegende Oberfläche der Reifenheizform, die das Negativ der Reifenoberfläche abbildet. Das Negativ des Neureifenkennzeichens kann beispielsweise teilweise höher als die umgebene Oberfläche der Formoberfläche ausgebildet sein, um auf der Lauffläche des Reifens später ein für den Verbraucher kontrastreicheren Eindruck des Neureifenkennzeichens zu erzeugen. Dies ist insbesondere möglich, indem das Neureifenkennzeichen unterschiedliche Höhen beziehungsweise Tiefen aufweist.

In einer weiteren Ausgestaltung richtet sich die Erfindung auf eine Reifenheizform für ein beschriebenes Verfahren zur Herstellung eines Fahrzeugreifens mit mindestens einem Neureifenkennzeichen, insbesondere eines beschriebenen Fahrzeugreifens, wobei die Reifenheizform ein eingraviertes Negativ eines Neureifenkennzeichens im Bereich der Lauffläche aufweist. Vorteilhafterweise kann mit Hilfe einer solchen Reifenheizform ein Neureifenkennzeichen auf der Lauffläche eines Fahrzeugreifen erzeugt werden, welches den Reifen als neu identifiziert und nicht nachträglich auf die Lauffläche aufgebracht werden kann. Durch die beschriebene Reifenheizform kann beispielsweise ein Reifen mit einem fälschungssicherem Neureifenkennzeichen hergestellt werden.

Die bereits beschriebenen Ausführungsformen in Bezug auf den Fahrzeugreifen sowie auf das Verfahren können sich, vice versa, auf die erfindungsgemäße Reifenheizform beziehen.

Ferner richtet sich die Erfindung in einer weiteren Ausgestaltung der Erfindung auf die Verwendung eines Neureifenkennzeichens auf einer Lauffläche eines beschriebenen Fahrzeugreifens zur Kennzeichnung der Neuheit des Fahrzeugreifens. Vorteilhafterweise kann durch die Verwendung eines Neureifenkennzeichens auf einer Lauffläche eines Fahrzeugreifens der Fahrzeugreifen lediglich im Neuzustand gekennzeichnet werden. Die Verwendung von Neureifenkennzeichen auf der Lauffläche eins Fahrzeugreifens sind im Stand der Technik nicht üblich, insbesondere keine Neureifenkennzeichen, die eine erhabene Oberfläche im Vergleich zu der umgebenen Oberfläche der Lauffläche aufweisen.

### Figurenbeschreibung

Weitere Einzelheiten und Vorteile der vorliegenden Erfindung ergeben sich aus der nachfolgenden Beschreibung der Ausführungsführungsbeispiele in Verbindung mit den Zeichnungen. In diesen zeigen
- Figur 1: eine schematische Seitenansicht eines Fahrzeugreifens mit Neureifenkennzeichen und eine Reifenheizform,
- Figur 2: eine schematische Seitenansicht einer Reifenheizform und
- Figur 3: eine Draufsicht auf eine Lauffläche eines Fahrzeugreifens.

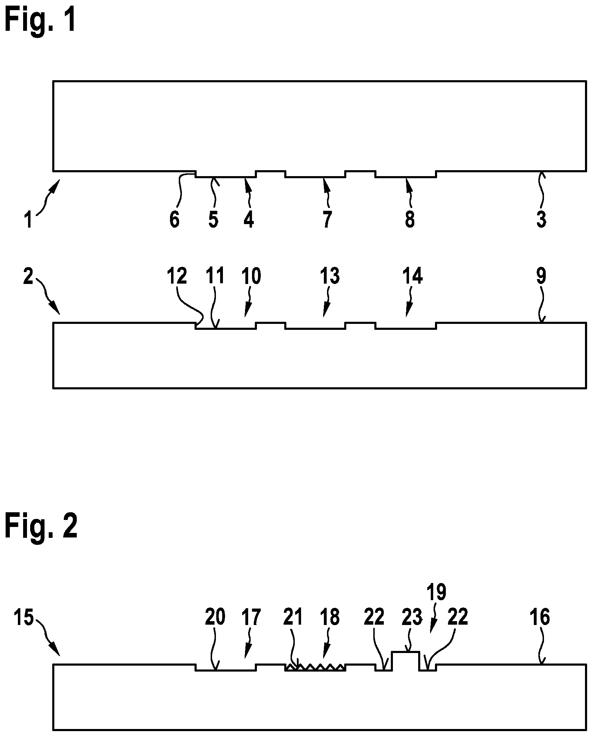

Figur 1 zeigt einen Ausschnitt eines Fahrzeugreifens 1 und einer Reifenheizform 2 in Seitenansicht. Der Fahrzeugreifen 1 weist auf der Lauffläche 3 ein Neureifenkennzeichen 4 mit einer Oberfläche 5 des Neureifenkennzeichens auf, wobei die Oberfläche 5 höher als die umgebene Oberfläche der Lauffläche 3 ist. Die Höhendifferenz 6 ist der Unterschied zwischen der Oberfläche 5 des Neureifenkennzeichens und der umgebenen Oberfläche der Lauffläche 3. Zudem weist der Fahrzeugreifen 1 ein zweites Neureifenkennzeichen 7 und ein dritten Neureifenkennzeichen 8 auf, die dem Neureifenkennzeichen 3 entsprechen.

Ferner umfasst die Reifenheizform 2 eine Formoberfläche 9 im Bereich der Lauffläche, wobei auf der Formoberfläche 9 ein Negativ des Neureifenkennzeichens 10 eingraviert ist. Das Negativ des Neureifenkennzeichens 10 weist eine eingravierte Oberfläche 11 auf, die tiefer als die umgebene Oberfläche der Formoberfläche 9 ist. Die Tiefendifferenz 12 in der Reifenheizform 2 entspricht der Höhendifferenz 6 des ersten Neureifenkennzeichens 4 abzüglich des Schrumpfes, welcher als Vereinfachung vernachlässigt wird. Die Reifenheizform 2 weist auf der Formoberfläche 9 zudem ein Negativ des zweiten Neureifenkennzeichens 13 und ein Negativ des dritten Neureifenkennzeichens 14 auf. Die Oberfläche der Lauffläche 3 des Fahrzeugreifens 1 wird insgesamt durch die Formoberfläche 9 der Reifenheizform 2 im Bereich der Lauffläche bestimmt.

Figur 2 zeigt eine weitere mögliche Reifenheizform 15 mit einer Formoberfläche 16 und einem Negativ eines Neureifenkennzeichens 17, einem weiteren zackenförmigen Negativ eines Neureifenkennzeichens 18 und einem weiteren u-förmigen Negativ eines Neureifenkennzeichens 19. Das Negativ des Neureifenkennzeichens 17 weist die eingravierte Oberfläche 20 auf, die tiefer als die umgebene Oberfläche der Formoberfläche 16 liegt. Die eingravierte Oberfläche 20 weist eine planare Oberflächenstruktur auf. Das zackenförmige Negativ eines Neureifenkennzeichens 18 hingegen weist eine zackenförmige Oberfläche 21 auf. Lediglich ein Teil der zackenförmigen Oberfläche 21 liegt tiefer als die umgebene Formoberfläche 16 im Bereich der Lauffläche. Ferner weist das u-förmige Negativ eines Neureifenkennzeichens 19 eine erste tiefer liegende Oberfläche 22 und eine zweite höher liegende Oberfläche 23 auf. Die höher liegende Oberfläche 23 ist höher als die umgebene Formoberfläche 16.

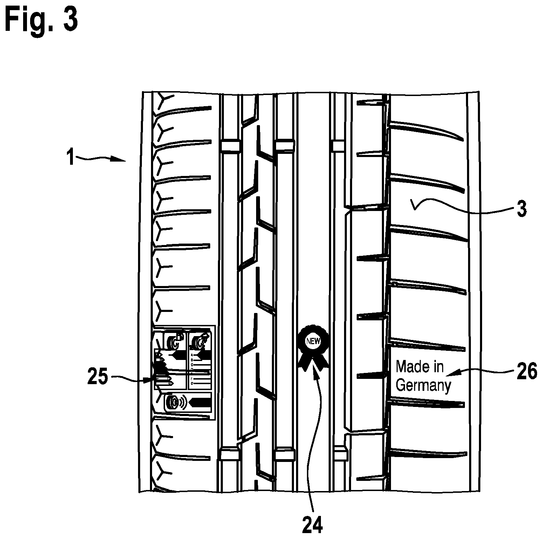

Figur 3 zeigt einen Fahrzeugreifen 1 in Draufsicht auf den Laufstreifen. Der Fahrzeugreifen 1 weist eine Lauffläche 3 auf, wobei auf der Lauffläche 3 ein Neureifenkennzeichen "NEW" 24 angeordnet ist. Ferner weist der Fahrzeugreifen 1 ein Neureifenkennzeichen mit Energielabel 25 und ein Neureifenkennzeichen "Made in Germany" 26 auf.

### Bezugszeichenliste

- 1: Fahrzeugreifen
- 2: Reifenheizform
- 3: Lauffläche
- 4: Neureifenkennzeichen
- 5: Oberfläche des Neureifenkennzeichens
- 6: Höhendifferenz
- 7: zweites Neureifenkennzeichen
- 8: drittes Neureifenkennzeichen
- 9: Formoberfläche
- 10: Negativ des Neureifenkennzeichens
- 11: eingravierte Oberfläche
- 12: Tiefendifferenz
- 13: Negativ des zweiten Neureifenkennzeichens
- 14: Negativ des dritten Neureifenkennzeichens
- 15: weitere Reifenheizform
- 16: Formoberfläche der weiteren Reifenheizform
- 17: Negativ eines Neureifenkennzeichens der weiteren Reifenheizform
- 18: zackenförmiges Negativ eines Neureifenkennzeichens
- 19: u-förmiges Negativ eines Neureifenkennzeichens
- 20: planare Oberfläche
- 21: zackenförmige Oberfläche
- 22: erste tiefer liegende Oberfläche
- 23: zweite höher liegende Oberfläche
- 24: Neureifenkennzeichen "NEW"
- 25: Neureifenkennzeichen mit Energielabel
- 26: Neureifenkennzeichen "Made in Germany"

## Patentansprüche

1. Fahrzeugreifen (1), aufweisend eine Lauffläche (3), wobei die Lauffläche (3) mindestens ein Neureifenkennzeichen (4, 7, 8) aufweist, dessen Oberfläche (5) zumindest teilweise höher als die umgebene Oberfläche der Lauffläche (3) ist, wobei die Oberfläche des Neureifenkennzeichens (5) mindestens einen ersten Bereich aufweist, der maximal 150 Mikrometer höher als die umgebene Oberfläche der Lauffläche (3) ist, wobei der erste Bereich der Oberfläche (5) einen zweiten tiefer liegenden Bereich umschließt, **dadurch gekennzeichnet, dass** der zweite tiefer liegende Bereich maximal 150 Mikrometer tiefer als die umgebene Oberfläche der Lauffläche (3) liegt.

2. Fahrzeugreifen (1) nach Anspruch 1, **dadurch gekennzeichnet, dass** die Oberfläche des Neureifenkennzeichens (5) mindestens einen ersten Bereich aufweist, der maximal 100 Mikrometer höher als die umgebene Oberfläche der Lauffläche (3) ist.

3. Fahrzeugreifen (1) nach Anspruch 2, **dadurch gekennzeichnet, dass** der erste Bereich der Oberfläche (5) einen zweiten tiefer liegenden Bereich umschließt, der zumindest teilweise tiefer als die umgebene Oberfläche der Lauffläche (3) liegt.

4. Fahrzeugreifen (1) nach Anspruch 3, **dadurch gekennzeichnet, dass** der zweite tiefer liegende Bereich maximal 100 Mikrometer tiefer als die umgebene Oberfläche der Lauffläche (3) liegt.

5. Fahrzeugreifen (1) nach einem der vorherigen Ansprüche, **dadurch gekennzeichnet, dass** der erste und/oder zweite Bereich ein zur umgebenen Oberfläche der Lauffläche (3) kontrastreichere Oberflächenstrukturierung aufweist, bevorzugt aufgeraut ist.

6. Fahrzeugreifen (1) nach einem der vorherigen Ansprüche, **dadurch gekennzeichnet, dass** das mindestens eine Neureifenkennzeichen (4, 7, 8) nur im Neuzustand des Fahrzeugreifens (1) sichtbar ist.

7. Fahrzeugreifen (1) nach einem der vorherigen Ansprüche, **dadurch gekennzeichnet, dass** das mindestens eine Neureifenkennzeichen (4, 7, 8) mindestens eine Schraffur und/oder ein Symbol und/oder mindestens ein Zeichen und/oder mindestens eine Ziffer und/oder mindestens einen Buchstaben aufweist.

8. Verfahren zur Herstellung eines Fahrzeugreifens (1) mit mindestens einem Neureifenkennzeichen (4, 7, 8) nach einem der Ansprüche 1 bis 7,
**dadurch gekennzeichnet, dass**
der Fahrzeugreifen (1) in einer Reifenheizform (2) hergestellt wird, wobei die Reifenheizform (2) mindestens ein zumindest teilweise eingraviertes Negativ eines Neureifenkennzeichens (10, 13, 14) im Bereich der Lauffläche (3) aufweist.

9. Verfahren nach Anspruch 8, **dadurch gekennzeichnet, dass** das eingravierte Negativ des Neureifenkennzeichens (10, 13, 14) eine Oberfläche (11) mit mindestens einem ersten eingravierten Bereich aufweist, der zumindest teilweise maximal 150 Mikrometer, insbesondere maximal 100 Mikrometer, tiefer als die umgebene Formoberfläche (16) der Lauffläche ist.

10. Verfahren nach Anspruch 8 oder 9, **dadurch gekennzeichnet, dass** der erste eingravierte Bereich der Oberfläche (11) einen zweiten höher liegenden eingravierten Bereich umschließt, der bevorzugt zumindest teilweise höher als die umgebene Formoberfläche (16) der Lauffläche liegt.

11. Reifenheizform (2) für die Herstellung eines Fahrzeugreifens (1) mit mindestens einem Neureifenkennzeichen (4, 7 ,8) nach einem der Ansprüche 8 bis 10,
**dadurch gekennzeichnet, dass** die Reifenheizform (2) ein eingraviertes Negativ eines Neureifenkennzeichens (10, 13, 14) im Bereich der Lauffläche aufweist.

12. Verwendung eines Neureifenkennzeichens (4, 7, 8) auf einer Lauffläche (3) eines Fahrzeugreifens (1) nach einem der Ansprüche 1 bis 7 zur Kennzeichnung der Neuheit des Fahrzeugreifens (1).

## Claims

1. Vehicle tyre (1) having a tread (3), wherein the tread (3) has at least one new-tyre identifier (4, 7, 8) whose surface (5) is at least partly higher than the surrounded surface of the tread (3), wherein the surface of the new-tyre identifier (5) has at least one first region which is at most 150 micrometres higher than the surrounded surface of the tread (3), wherein the first region of the surface (5) surrounds a second, lower region, **characterized in that** the second, lower region is at most 150 micrometres lower than the surrounded surface of the tread (3).

2. Vehicle tyre (1) according to Claim 1, **characterized in that** the surface of the new-tyre identifier (5) has at least one first region which is at most 100 micrometres higher than the surrounded surface of the tread (3).

3. Vehicle tyre (1) according to Claim 2, **characterized in that** the first region of the surface (5) surrounds a second, lower region which is at least partly lower than the surrounded surface of the tread (3).

4. Vehicle tyre (1) according to Claim 3, **characterized in that** the second, lower region is at most 100 micrometres lower than the surrounded surface of the tread (3).

5. Vehicle tyre (1) according to one of the preceding claims, **characterized in that** the first region and/or second region have/has a surface structuring having higher contrast in relation to the surrounded surface of the tread (3), preferably are/is roughened.

6. Vehicle tyre (1) according to one of the preceding claims, **characterized in that** the at least one new-tyre identifier (4, 7, 8) is visible only in the new state of the vehicle tyre (1).

7. Vehicle tyre (1) according to one of the preceding claims, **characterized in that** the at least one new-tyre identifier (4, 7, 8) has at least one hatching and/or a symbol and/or at least one mark and/or at least one numeral and/or at least one letter.

8. Method for producing a vehicle tyre (1) having at least one new-tyre identifier (4, 7, 8) according to one of Claims 1 to 7,
**characterized in that**
the vehicle tyre (1) is produced in a tyre heating mould (2), wherein the tyre heating mould (2) has at least one at least partly engraved negative of a new-tyre identifier (10, 13, 14) in the region of the tread (3).

9. Method according to Claim 8, **characterized in that** the engraved negative of the new-tyre identifier (10, 13, 14) has a surface (11) with at least one first engraved region which is at least partly at most 150 micrometres, in particular at most 100 micrometres, lower than the surrounded mould surface (16) of the tread.

10. Method according to Claim 8 or 9, **characterized in that** the first engraved region of the surface (11) surrounds a second, higher engraved region, which is preferably at least partly higher than the surrounded mould surface (16) of the tread.

11. Tyre heating mould (2) for producing a vehicle tyre (1) having at least one new-tyre identifier (4, 7, 8) according to one of Claims 8 to 10, **characterized in that** the tyre heating mould (2) has an engraved negative of a new-tyre identifier (10, 13, 14) in the region of the tread.

12. Use of a new-tyre identifier (4, 7, 8) on a tread (3) of a vehicle tyre (1) according to one of Claims 1 to 7 for identifying the new state of the vehicle tyre (1).

## Revendications

1. Pneu de véhicule (1), présentant une bande de roulement (3), la bande de roulement (3) présentant au moins une marque de pneu neuf (4, 7, 8) dont la surface (5) est au moins partiellement plus haute que la surface environnante de la bande de roulement (3), la surface de la marque de pneu neuf (5) présentant au moins une première zone, qui est au maximum 150 micromètres plus haute que la surface environnante de la bande de roulement (3), la première zone de la surface (5) entourant une deuxième zone située plus bas, **caractérisé en ce que** la deuxième zone située plus bas est située au maximum 150 micromètres plus bas que la surface environnante de la bande de roulement (3).

2. Pneu de véhicule (1) selon la revendication 1, **caractérisé en ce que** la surface de la marque de pneu neuf (5) présente au moins une première zone qui est au maximum 100 microns plus haute que la surface environnante de la bande de roulement (3).

3. Pneu de véhicule (1) selon la revendication 2, **caractérisé en ce que** la première zone de la surface (5) entoure une deuxième zone située plus bas qui est située au moins partiellement plus bas que la surface environnante de la bande de roulement (3).

4. Pneu de véhicule (1) selon la revendication 3, **caractérisé en ce que** la deuxième zone située plus bas est située au maximum 100 micromètres plus bas que la surface environnante de la bande de roulement (3).

5. Pneu de véhicule (1) selon l'une quelconque des revendications précédentes, **caractérisé en ce que** la première et/ou la deuxième zone présente une structuration de surface plus contrastée par rapport à la surface environnante de la bande de roulement (3), de préférence est rugosifiée.

6. Pneu de véhicule (1) selon l'une quelconque des revendications précédentes, **caractérisé en ce que** l'au moins une marque de pneu neuf (4, 7, 8) n'est visible qu'à l'état neuf du pneu de véhicule (1).

7. Pneu de véhicule (1) selon l'une quelconque des revendications précédentes, **caractérisé en ce que** l'au moins une marque de pneu neuf (4, 7, 8) présente au moins une hachure et/ou un symbole et/ou au moins un signe et/ou au moins un chiffre et/ou au moins une lettre.

8. Procédé de fabrication d'un pneu de véhicule (1) avec au moins une marque de pneu neuf (4, 7, 8) selon l'une quelconque des revendications 1 à 7, **caractérisé en ce que**
le pneu de véhicule (1) est fabriqué dans un moule de chauffage de pneu (2), le moule de chauffage de pneu (2) présentant au moins un négatif au moins partiellement gravé d'une marque de pneu neuf (10, 13, 14) dans la zone de la bande de roulement (3).

9. Procédé selon la revendication 8, **caractérisé en ce que** le négatif gravé de la marque de pneu neuf (10, 13, 14) présente une surface (11) avec au moins une première zone gravée qui est au moins partiellement au maximum 150 micromètres, notamment au maximum 100 micromètres, plus basse que la surface de moulage environnante (16) de la bande de roulement.

10. Procédé selon la revendication 8 ou 9, **caractérisé en ce que** la première zone gravée de la surface (11) entoure une deuxième zone gravée située plus haut, qui est située de préférence au moins partiellement plus haut que la surface de moulage environnante (16) de la bande de roulement.

11. Moule de chauffage de pneu (2) pour la fabrication d'un pneu de véhicule (1) avec au moins une marque de pneu neuf (4, 7, 8) selon l'une quelconque des revendications 8 à 10, **caractérisé en ce que** le moule de chauffage de pneu (2) présente un négatif gravé d'une marque de pneu neuf (10, 13, 14) dans la zone de la bande de roulement.

12. Utilisation d'une marque de pneu neuf (4, 7, 8) sur une bande de roulement (3) d'un pneu de véhicule (1) selon l'une quelconque des revendications 1 à 7 pour indiquer la nouveauté du pneu de véhicule (1).
